# EUROPÄISCHE PATENTANMELDUNG

(11) **EP 0 842 602 A1**
(43) Veröffentlichungstag der Anmeldung: **20.05.1998**
(21) Anmeldenummer: 97110188.6
(22) Anmeldetag: 21.06.1997
(51) Int. Cl.: A01K 63/00

(54) **Terrarium und Verfahren zu dessen Herstellung**

(30) Priorität: 14.11.1996 DE 29619792 U
(71) Anmelder: Laubrock, Stefan, 46499 Hamminkeln (DE)
(72) Erfinder: Laubrock, Stefan, 46499 Hamminkeln (DE)
(74) Vertreter: Happe, Otto, Dipl.-Ing.

(57) **Zusammenfassung**

Bei einem aus flächigen Bauteilen gebildetes Terrarium, wobei die Bauteile zumindest teilweise aus transparentem Werkstoff, wie Glas, Acrylglas o. dgl. bestehen,
- sind die flächigen Bauteile (1) mittels Profilstäben (2) miteinander verbunden,
- wird die Verbindung der Bauteile (1) mittels der Profilstäbe (2) dadurch bewirkt, daß die Bauteile (1) in Ausnehmungen der Profilstäbe (2) eingesteckt sind,
- und sind die Ausnehmungen (3) der Profilstäbe (2) so bemessen, daß sie der Wandstärke der Bauteile (1) entsprechen.

## Beschreibung

Die Erfindung betrifft ein aus flächigen Bauteilen gebildeten Terrariums, wobei die Bauteile zumindest teilweise aus transparentem Werkstoff, wie Glas, Acrylglas o. dgl. bestehen. Die Erfindung betrifft ferner ein Verfahren zur Herstellung eines Terrariums.

Die bekannten Terrarien bestehen aus einem sogenannten Vollglassystem, d. h., sämtliche Bestandteile jedes Terrariums sind unlösbar miteinander verbunden. Derartige Terrarien sind daher sehr sperrig und leicht zerbrechlich, so daß der Transport dieser Terrarien hohe Kosten verursacht. Darüber hinaus ergibt sich aus der leichten Zerbrechlichkeit eine erhebliches Verletzungsgefahr bei der Handhabung der bekannten Terrarien.

Der Erfindung liegt die Aufgabe zugrunde, ein Terrarium so auszubilden, daß es die vorgenannten Nachteile nicht aufweist.

Die Lösung der gestellten Aufgabe besteht bei einem Terrarium der eingangs genannten Art darin,
- daß die flächigen Bauteile mittels Profilstäben miteinander verbunden sind,
- daß die Verbindung der Bauteile mittels der Profilstäbe dadurch bewirkt wird, daß die Bauteile in Ausnehmungen der Profilstäbe eingesteckt sind,
- und daß die Ausnehmungen der Profilstäbe so bemessen sind, daß sie der Wandstärke der Bauteile entsprechen.

Das Ergebnis der Erfindung ist ein Terrariumsteckkastensystem, das in zerlegtem Zustand versand werden kann. Hierbei können die einzelnen Bestandteile flach verpackt werden. Der Zusammenbau der einzelnen Bestandteile erfolgt erst an dem Ort, an dem das Terrarium verwendet werden soll.

Das erfindungsgemäße Terrarium benötigt nur einen geringen Transportraum, nämlich nur etwa soviel, als der Summe des Volumens seiner einzelnen Bestandteile entspricht. Außerdem ist durch das flache Verpacken der einzelnen Bestandteile des Terrariums sowohl die Bruchgefahr als auch die davon ausgehende Verletzungsgefahr auf ein Minimum reduziert.

In Ausgestaltung der Erfindung befindet sich zwischen den Bauteilen und den Profilstäben ein Kleber, der vor dem Einstecken der Bauteile in die Profilstäbe in die Ausnehmungen der Profilstäbe eingebracht worden ist. Durch dieses Merkmal der Erfindung ist auch die Herbeiführung einer unlösbaren Verbindung der einzelnen Bestandteile des Terrariums möglich.

Zweckmäßigerweise ist der Kleber aus Silikon hergestellt. Derartige Kleber sind leicht zu verarbeiten und gewährleisten eine dauerhafte Verklebung.

In weiterer Ausgestaltung der Erfindung ist mindestens eines der Bauteile zumindest teilweise durch Schiebetüren gebildet. Diese Schiebetüren können so ausgebildet sein, daß sie nach beiden Seiten verschoben werden können. Die Schiebetüren ermöglichen einen leichten Zugriff in den Innenraum des Terrariums.

Das erfindungsgemäße Terrarium kann noch dadurch verbessert werden, daß mindestens eines der Bauteile zumindest teilweise durch eine Lochplatte gebildet ist.

Hierdurch ist eine einwandfreie Belüftung des Terrarium gewährleistet. Die Lochplatte kann beispielsweise aus Aluminium hergestellt sein.

Bei einer bevorzugten Ausführungsform des erfindungsgemäßen Terrariums sind die die Verbindung der Bauteile mit den Schiebetüren bzw. mit der Lochplatte bewirkenden Profilstäbe als Doppel-U-Profile bzw. als H-Profile ausgebildet. Die Doppel-U-Profile ermöglichen den in dessen Ausnehmungen eingesetzten beiden Schiebetüren ein leichtgängiges Verschieben. Bei dem H-Profil kann eine Ausnehmung schmaler sein als die andere, wobei in die schmalere Ausnehmung die Lochplatte eingesetzt wird.

Nach einem weiteren Merkmal der Erfindung sind die die Verbindung der Bauteile miteinander sowie mit den Schiebetüren bzw. der Lochplatte bewirkenden Profilstäbe aus Kunststoff hergestellt. Einerseits weisen Profilstäbe aus Kunststoff nur ein verhältnismäßig geringes Gewicht auf; andererseits können derartige Profilstäbe kostengünstig hergestellt werden.

Die Profilstäbe können aber auch aus Acrylglas hergestellt sein. Dies ermöglicht die Verwendung transparenter Profilstäbe, die wesentlich zur optischen Wirkung des Terrariums beitragen.

Bei einem Verfahren zur Herstellung eines erfindungsgemäßen Terrariums werden folgende Verfahrensschritte durchgeführt:
- Die flächigen Bauteile werden auf das entsprechende Maß geschnitten.
- Die Profilstäbe werden auf die jeweilige Kantenlänge zugeschnitten und an den Enden mit einer Gehrung versehen.
- Die flächigen Bauteile werden mittels der Profilstäbe in der Weise miteinander verbunden, daß die Bauteile in Ausnehmungen der Profilstäbe eingesteckt werden,

Zweckmäßigerweise werden vor dem Zusammenbau des Terrariums die Kanten der flächigen Bauteile geschliffen. Diese Maßnahme ist bei aus Acrylglas hergestellten flächigen Bauteilen nicht erforderlich.

In Ausgestaltung des erfindungsgemäßen Verfahrens werden mindestens eines der flächigen Bauteile mit Schiebetüren und mindestens eines der flächigen Bauteile mit mindestens einer Lochplatte versehen.

In der Zeichnung ist ein Ausführungsbeispiel des erfindungsgemäßen Terrariums dargestellt. Es zeigen:
- Fig. 1: eine Terrarium in zusammengebautem Zustand, in perspektivischer Darstellung;
- Fig. 2: das in Fig. 1 dargestellte Terrarium, in seine einzelnen Bestandteile zerlegt, ebenfalls in perspektivischer Darstellung;
- Fig. 3 bis 5: mehrere Profilstäbe im Querschnitt.

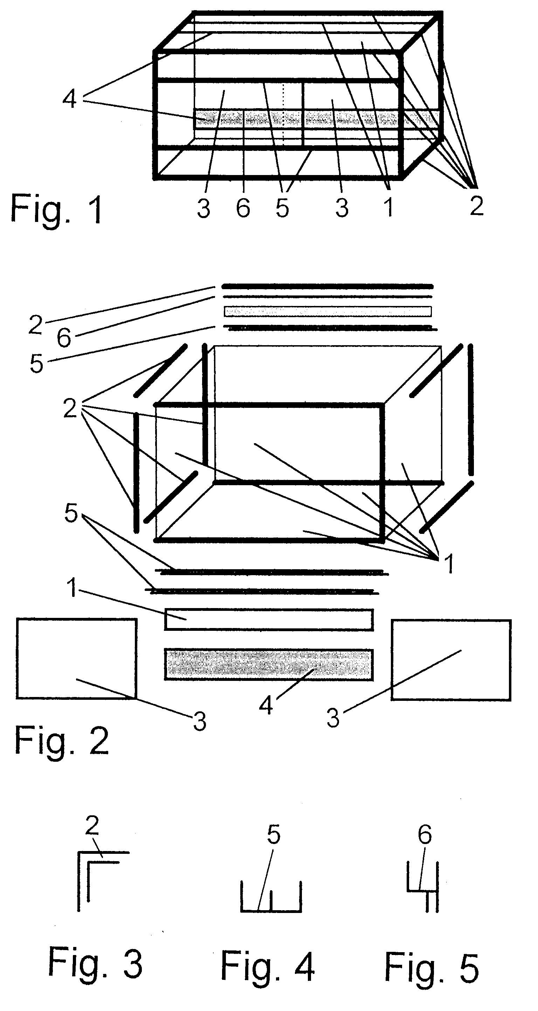

Das erfindungsgemäße Terrarium weist flächige Bauteile 1 auf, die durch Profilstäbe 2 miteinander verbunden sind (Fig. 1). Als Profilstäbe 2 dienen Kantenprofile (Fig. 3). Die flächigen Bauteile sind teilweise als Schiebetüren 3 und teilweise als Lochplatte 4 ausgebildet. Die Lochplatten 4 können aus Aluminium bestehen. Bei dem dargestellten Ausführungsbeispiel sind in das vordere Bauteil 1 Schiebetüren 3 eingesetzt, während in das hintere und das obere Bauteil 1 je eine Lochplatte 4 eingesetzt ist. Hierbei sind zwischen dem betreffenden Bauteil 1 und den Schiebetüren 3 einerseits sowie zwischen den betreffenden Bauteilen 1 und den Lochplatten 4 andererseits Doppel-U-Profile 5 (Fig. 4) oder H-Profile 6 (Fig. 5) vorgesehen.

## Patentansprüche

1. Aus flächigen Bauteilen gebildetes Terrarium, wobei die Bauteile zumindest teilweise aus transparentem Werkstoff, wie Glas, Acrylglas o. dgl. bestehen,
**dadurch gekennzeichnet**,
1.1 daß die flächigen Bauteile (1) mittels Profilstäben (2) miteinander verbunden sind,
1.2 daß die Verbindung der Bauteile (1) mittels der Profilstäbe (2) dadurch bewirkt wird, daß die Bauteile (1) in Ausnehmungen der Profilstäbe (2) eingesteckt sind,
1.3 und daß die Ausnehmungen (3) der Profilstäbe (2) so bemessen sind, daß sie der Wandstärke der Bauteile (1) entsprechen.

2. Terrarium nach Anspruch 1, dadurch gekennzeichnet, daß sich zwischen den Bauteilen (1) und den Profilstäben (2) ein Kleber befindet, der vor dem Einstecken der Bauteile (1) in die Profilstäbe (2) in die Ausnehmungen (3) der Profilstäbe (2) eingebracht worden ist.

3. Terrarium nach Anspruch 2, dadurch gekennzeichnet, daß der Kleber aus Silikon hergestellt ist.

4. Terrarium nach Anspruch 1, 2 oder 3, dadurch gekennzeichnet, daß mindestens eines der Bauteile (1) zumindest teilweise durch Schiebetüren (3) gebildet ist.

5. Terrarium nach einem der Ansprüche 1 bis 4, dadurch gekennzeichnet, daß mindestens eines der Bauteile (1) zumindest teilweise durch eine Lochplatte (4) gebildet ist.

6. Terrarium nach Anspruch 4 oder 5, dadurch gekennzeichnet, daß die die Verbindung der Bauteile (1) mit den Schiebetüren (3) bzw. mit der Lochplatte (4) bewirkenden Profilstäbe als Doppel-U-Profile (5) bzw. als H-Profile (6) ausgebildet sind.

7. Terrarium nach einem der Ansprüche 1 bis 6, dadurch gekennzeichnet, daß die die Verbindung der Bauteile (1) miteinander sowie mit den Schiebetüren (3) bzw. der Lochplatte (4) bewirkenden Profilstäbe (2, 5, 6) aus Kunststoff hergestellt sind.

8. Terrarium nach einem der Ansprüche 1 bis 6, dadurch gekennzeichnet, daß die Profilstäbe (2, 5, 6) aus Acrylglas hergestellt sind.

9. Verfahren zur Herstellung eines Terrariums nach einem der Ansprüche 1 bis 8,
**dadurch gekennzeichnet**,
9.1 daß die flächigen Bauteile (1) auf das entsprechende Maß geschnitten werden,
9.2 daß die Profilstäbe (2) auf die jeweilige Kantenlänge zugeschnitten und an den Enden mit einer Gehrung versehen werden
9.3 und daß die flächigen Bauteile (1) mittels der Profilstäbe (2) in der Weise miteinander verbunden werden, daß die Bauteile (1) in Ausnehmungen der Profilstäbe (2) eingesteckt werden.

10. Verfahren nach Anspruch 9, dadurch gekennzeichnet, daß mindestens eines der flächigen Bauteile (1) mit Schiebetüren (3) und mindestens eines der flächigen Bauteile (1) mit mindestens einer Lochplatte (4) versehen werden.
